# EUROPÄISCHE PATENTSCHRIFT

(11) **EP 2 131 986 B1**
(45) Veröffentlichungstag und Bekanntmachung des Hinweises auf die Patenterteilung: **08.05.2013**
(21) Anmeldenummer: 08748699.9
(22) Anmeldetag: 28.03.2008
(51) Int. Cl.: B23D 61/02, B23D 65/00

(54) **SÄGEBLATT UND VERFAHREN ZU SEINER HERSTELLUNG**
SAW BLADE AND MANUFACTURING METHOD THEREFOR
LAME DE SCIE ET SON PROCEDE DE FABRICATION

(30) Priorität: 04.04.2007 DE 102007016207
(43) Veröffentlichungstag der Anmeldung: 16.12.2009
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/DE2008/000522
(87) Internationale Veröffentlichungsnummer: WO 2008/122264

(56) Entgegenhaltungen:
- EP-A1- 0 718 080
- CH-A- 452 871
- DE-A1- 2 606 598
- DE-A1- 19 901 208
- DE-C- 507 472
- DE-U1- 8 208 339
- US-A- 1 796 864
- US-A- 2 285 315

## Beschreibung

Die Erfindung betrifft ein Sägemittel nach dem Oberbegriff des Anspruchs 1 und ein Verfahren zur Herstellung des Sägemittels. Eine solche Vorrichtung ist aus US 1,796,864 bekannt.

Sägeblätter sind in Form von Kreissägeblättern im Stand der Technik hinreichend bekannt. Aus der DE 20 2005 003 643 U1 ist ein Kreissägeblatt bekannt, das einen Träger aufweist, von dem einteilig mit dem Träger ausgebildete Zahnrücken entlang des Umfanges des Kreissägeblattes abstehen. In Sägerichtung vorlaufend ist jedem Zahnrücken der eigentliche Sägezahn mit Schneide angeformt.

Schneiden und Zahnrücken sind separate Bauteile. Die Schneiden sind aus härterem Material gebildet als die Zahnrücken. Nachteilig an dem bekannten Stand der Technik ist, dass zur Befestigung der Schneide am Zahnrücken der Zahnrücken selbst eine Mindestbreite in Sägerichtung aufweisen muss, um eine hinreichende Stabilität zu gewährleisten. Die Schneide wird auf den Zahnrücken aufgelötet. Dabei kann die Schneide leicht aus ihrer senkrecht zur Sägerichtung verlaufenden Ausrichtung verkippen, so dass sie in der Regel nachgeschliffen werden muss. Aufgrund des Nachschleifens werden auf den Sägezahn aufgebrachte Beschichtungen beschädigt, so dass das Sägeblatt insgesamt nachbeschichtet werden muss.

Aus der DE 26 06 598 A1 ist ein Sägeblatt bekannt mit Zahneinsätzen, die auf eine Trägerkante eines Sägeblattes aufgesetzt werden können. Die Zahneinsätze weisen außenseitig Schneiden auf, die ein Kaltverschweißen der Zahnflanken mit dem Material des Werkstückes vermeiden.

Aus der US 2,285,315 ist ein Kreissägeblatt mit Zahneinsätzen bekannt, die mittels eines Stiftes in der Trägerkante festgesetzt werden können.

Aus der DE 82 08 339.8 U1 ist ein Sägeblatt mit Hartmetalleinsätzen bekannt, die mittels eines hinterschnittenen Randbereiches in Aussparungen einer Trägerkante seitlich eingesetzt werden können.

Aus der US 1,796,864 ist ein Sägeblatt mit Zahneinsätzen bekannt, die aus einer Halterung des Zahneinsatzes heraus in den scheibenförmigen Träger abstehen.

Aus der EP 0 718 080 A1 ist ebenfalls ein Sägeblatt mit austauschbaren Schneidsegmenten bekannt, wobei die Schneidsegmente in den Träger weit hinein abstehende Segmentträger aufweisen.

Es ist Aufgabe der Erfindung, ein Sägemittel zur Verfügung zu stellen, das gegenüber dem Stand der Technik einfacher herstellbar ist.

Die Aufgabe wird durch ein eingangs genanntes Sägemittel mit den kennzeichnenden Merkmalen des Anspruchs 1 gelöst.

Der wenigstens eine Zahneinsatz ist positionsstabil auf dem Träger befestigt. Dabei ist der Zahneinsatz vor der Montage auf dem Träger ein separates Bauteil. Positionsstabil heißt, der Zahneinsatz verändert seine relative Position zum Träger auch nicht im Sägebetrieb und unter Krafteinwirkungen.

Erfindungsgemäß ist die Trägerkante des scheibenförmig ausgebildeten Trägers in einem Querschnitt quer zur Scheibenebene im Wesentlichen dachförmig ausgeformt. Die Zahneinsätze weisen eine der Dachform der Trägerkante angepasste dachförmige Aussparung als Halterung auf. Die Aussparung passt sich nach der Montage der Trägerkante formschlüssig an. Erfindungsgemäß sind zur Erhöhung der Positionsstabilität im Sägebetrieb entlang der Trägerkante angeordnete Aussparungen und/oder Ausbuchtungen vorgesehen. Die Aussparungen und/oder Ausbuchtungen korrespondieren mit innenseitig der Halterung des Zahneinsatzes angeordneten korrespondierenden Ausbuchtungen und/oder Aussparungen. Bei der Herstellung des Sägemittels wird der Zahneinsatz mit der Halterung formschlüssig auf die Trägerkante gesetzt, wobei sich auch die Aussparungen und korrespondierenden Ausbuchtungen paarweise formschlüssig zusammenfügen. Da die Kraftwirkung während des Sägebetriebs insbesondere in tangentialer Richtung des scheibenförmig ausgebildeten Trägers verläuft, erhöhen die ineinander greifenden Aussparungen und korrespondierenden Ausbuchtungen die Positionsstabilität der Zahneinsätze auf der Trägerkante ganz erheblich.

Der Zahneinsatz weist wenigstens einen vollständigen Sägezahn mit jeweils wenigstens einer Schneide und wenigstens einem Zahnrücken auf. Der wenigstens eine, vorzugsweise jeder der Sägezähne kann auch genau eine Schneide und genau einen Zahnrücken aufweisen. Der Zahnrücken erstreckt sich von der Schneide bis zum Träger. Schneide und Zahnrücken sind integral, vorzugsweise auch homogen aus dem zweiten Material geformt.

Der Zahneinsatz ist vorzugsweise einstückig ausgebildet. Dabei umfasst der Zahneinsatz wenigstens einen Sägezahn der wiederum wenigstens eine Schneide mit Zahnrücken umfasst. Vorzugsweise ist der gesamte Zahneinsatz ein einstückiges und ein integral ausgebildetes Bauteil.

Vorzugsweise weist der Zahneinsatz ein zweites Material auf und der Träger ein erstes Material. Dabei ist das zweite Material härter und verschleißärmer als das erste Material.

Vorzugsweise ist die gesamte den Träger umlaufende Sägezahnreihe des Sägemittels aus Zahneinsätzen gebildet. Auf den Träger sind entlang einer Trägerkante Zahneinsätze aufgesetzt, die jeweils wenigstens einen vollständigen Sägezahn aufweisen. Der Zahneinsatz ist vorzugsweise einstückig ausgebildet und besteht vorzugsweise im Wesentlichen vollständig aus dem zweiten Material, das beispielsweise HM-Stahl aufweist. Das zweite Material ist grundsätzlich härter als das erste Material.

Das zweite Material eignet sich im Gegensatz zum ersten Material für einen dauerhaften Sägebetrieb. Gegenüber dem bekannten Stand der Technik ist der Zahneinsatz problemlos auf die Trägerkante aufsetzbar. Der Zahneinsatz hält dabei die vorgegebene Position mit hoher Präzision. Aufgrund der einstückigen Ausbildung von Schneidkante und Zahnrücken entfällt die separate Befestigung der Schneidkante, und der Zahnrücken kann somit in Sägerichtung schmaler als bei einer mehrteiligen Ausgestaltung ausgebildet werden, und er weist dennoch eine hinreichende Stabilität auf.

Unter Sägemittel werden hier insbesondere Kreissägeblätter und Bandsägebänder aber auch längliche Sägeblätter für Bügelsägen, Fuchsschwänze o.ä. verstanden. Kreissägeblätter sind im Wesentlichen starr, während Bandsägebänder flexibel sein können, entsprechend sind die Träger der Kreissägeblätter starr und vorzugsweise kreisförmig, während die Träger der Bandsägebänder bandförmig und flexibel sind.

Vorzugsweise sind die Schneiden und nachlaufenden Zahnrücken jedes Sägezahns des Sägeblattes jeweils einstückig aus dem zweiten Material ausgebildet. Vorzugsweise sollten alle Sägezähne Teil jeweils eines zugehörigen Zahneinsatzes sein, so dass das Sägemittel insgesamt aus nur zwei formunterschiedlichen Bauteilen, dem Träger und einer Vielzahl von baugleichen Zahneinsätzen, ausbildbar ist.

Grundsätzlich können auch zwei oder mehr bauungleiche Zahneinsatze vorgesehen sein. Beispielsweise kann die Zahnreihe aus alternierenden zwei- und dreizahnigen Zahneinsatzen bestehen.

In einer besonders bevorzugten Weiterbildung der Erfindung weist jeder Zahneinsatz wenigstens zwei aufeinander folgende Sägezähne auf, besonders bevorzugt weist jeder Zahneinsatz genau drei aufeinander folgende Sägezähne auf. Die bevorzugte Weiterbildung der Erfindung ermöglicht es, die Zahnrücken in Sägerichtung weiter zu verkürzen und damit den Zahnabstand zu verringern. Ein verringerter Zahnabstand bewirkt eine verbesserte Sägeleistung. Als zusätzlicher Vorteil eines mehrzahnigen Zahneinsatzes hat es sich erwiesen, dass der Zahneinsatz besonders fest und positionsstabil auf der Trägerkante montierbar ist und eine Nachjustierung oder ein Nachschleifen der Schneiden des Zahneinsatzes nicht erforderlich wird.

Zur Kompensation von Spannungen im Träger ist zwischen aufeinander folgenden Zahneinsätzen entlang der Zahnreihe jeweils eine Nut quer zur Zahnreihe vorgesehen.

Ein verbessertes Sägeverhalten zeigt sich, wenn trägerseitig der Schneide eine Aussparung in dem Sägezahn vorgesehen ist, die zwischen der Schneide und dem Träger angeordnet ist und im Wesentlichen eine löffelförmige Gestalt aufweist.

In einer bevorzugten Ausführungsform der Erfindung sind entlang der Trägerkante vorzugsweise periodisch angeordnete Aussparungen vorgesehen. Jeder Aussparung ist eine an einem Zahneinsatz innenseitig der Halterung angeordnete Ausbuchtung zugeordnet. Bei der Montage des Zahneinsatzes auf der Trägerkante ist die Ausbuchtung formschlüssig in die Aussparung einsteckbar. Durch das Zusammenwirken von Aussparung und Ausbuchtung wird die Stabilität des Zahneinsatzes in Umfangsrichtung erhöht und die Standzeit des Sägeblattes insgesamt verlängert. Darüber hinaus ermöglicht das Zusammenwirken von Aussparung und Ausbuchtung die in Umfangsrichtung exakte Positionierung des Zahneinsatzes auf der Trägerkante während der Montage. Die Aussparung kann in Form eines Kegels ausgebildet sein, und der Vorsprung kann als entsprechend ausgebildeter kegelförmiger Zapfen an der Innenseite der Halterung des Zahneinsatzes abstehen. Aussparung und Vorsprung bilden vorzugsweise eine formschlüssige Verbindung aus.

Hinsichtlich des Verfahrens wird die Erfindung durch ein eingangs genanntes Verfahren mit den Merkmalen des Anspruchs 14 erfüllt.

Das oben beschriebene Sägemittel ist gegenüber dem Stand der Technik einfacher, d.h. in weniger Bearbeitungsschritten und damit kostengünstiger herstellbar.

Zunächst wird ein Träger aus dem ersten Material zur Verfügung gestellt. Der Träger kann beispielsweise aus HSS-Stahl geformt werden. Insbesondere kann der Träger aus einem Blech mittels eines Lasers geschnitten werden. Der Träger weist eine in einem Querschnitt quer zur Scheibenebene dachförmige Trägerkante auf, die eine besonders große Auflagefläche zur Verfügung stellt.

Erfindungsgemäß wird Materialpulver in genau einer Hohlform zu einem Zahneinsatz gepresst. Der Zahneinsatz weist dabei wie oben beschrieben eine als im Wesentlichen dachförmige Aussparung ausgebildete Halterung auf, die der Dachform der Trägerkante des Trägers genau angepasst ist, so dass beim Aufsetzen des Zahneinsatzes auf die Trägerkante eine formschlüssige Verbindung über die gesamte Kontaktfläche entsteht. Erfindungsgemäß sind pro Zahneinsatz innenseitig der Halterung Ausbuchtungen und/oder Aussparungen angeordnet. Die Aussparungen und/oder Ausbuchtungen sind so ausgeformt, dass sie durch ein Pressverfahren in einer Hohlform herstellbar sind. Das setzt voraus, dass auf alle Seitenwände der Zahneinsätze, insbesondere auch auf die Seitenwände der Ausbuchtungen und/oder Aussparungen, ein hinreichend großer Druck ausgeübt werden kann. Deshalb sind die äußeren Seitenwände der Ausbuchtungen vorzugsweise in radialer Richtung stetig aufeinander zugeneigt angeordnet. Entsprechendes gilt für die Aussparungen. Nachfolgend wird das in der genau einen Hohlform gepresste Materialpulver gehärtet. Vorzugsweise wird das gepresste Materialpulver nachfolgend in einem Sinterverfahren gehärtet. Der gehärtete Zahneinsatz wird dann auf der Trägerkante positionsstabil befestigt, indem die wenigstens Ausbuchtung und/oder Aussparung des Zahneinsatzes in die korrespondierenden Aussparungen und/oder Ausbuchtungen der Trägerkante fornnschlüssig eingepasst wird.

Unabhängig von dem Träger werden Zahneinsätze aus dem zweiten Material, das von dem ersten Material verschieden ist und vorzugsweise fester als das erste Material ist, geformt. Bei dem zweiten Material kann es sich um HM-Stahl handeln.

Durch das Pressverfahren sind beinahe beliebige Formen der Schneiden ausbildbar, weil die Schneide nicht nachgeschliffen werden braucht. Für bestimmte Anwendungen ist ein Nachschleifen aber nach wie vor durchaus sinnvoll.

Die Zahneinsätze weisen jeweils wenigstens einen Sägezahn mit jeweils einer Schneide und jeweils einem zugeordneten Zahnrücken auf. Der Sägezahn ist auf einer Halterung einteilig angeformt. Die Halterung weist entlang der Sägerichtung eine der Trägerkante angepasste dachförmige Aussparung auf, die in einem Querschnitt senkrecht zur Bewegungsrichtung der Sägezähne während des Sägens, also in Sägerichtung, somit vorzugsweise trichterförmig ausgebildet ist. Der Zahneinsatz ist so positionsfest auf die Trägerkante aufsetzbar und kann dort aufgelötet werden. Gegenüber dem Stand der Technik werden bei der Befestigung der Zahneinsätze auf der Trägerkante unerwünschte Verkippungen und Verschiebungen der Schneide vollständig oder zumindest weitestgehend vermieden, da die Zahneinsätze gegenüber der Montage der Schneide allein deutlich großvoluminöser und damit leichter handhabbar sind.

In einer bevorzugten Weiterbildung der Erfindung werden Zahneinsätze ausgeformt, die wenigstens zwei, besonders vorzugsweise genau drei, hintereinander angeordnete Sägezähne aufweisen. Die für ein Sägeblatt zur Verfügung gestellten Zahneinsätze können alle baugleich sein, so dass ein Sägeblatt insgesamt aus einem Träger und einer Vielzahl von Zahneinsätzen herstellbar ist. Für den Fall, dass der Zahneinsatz gepresst und gesintert wird, braucht kostengünstigerweise nur eine Hohlform zur Verfügung gestellt werden.

Vorzugsweise wird der Zahneinsatz vor dem Auflöten auf den Träger mit einer Schutzschicht versehen. Bei der Schutzschicht kann es sich um eine Titanschicht oder Titanlegierungsschicht handeln. Besonders harte Beschichtungen werden mit Titancarbonitrid (TiCN)-haltigen Schutzschichten erzielt. Die Schutzschicht verleiht dem Zahneinsatz zusätzliche Härte und schützt ihn insbesondere vor Korrosion. Weil der Zahneinsatz in seiner Position spielfrei auf die Trägerkante aufsetzbar und auflötbar ist, ist eine Nachbehandlung des Sägezahnes durch Nachschleifen der Schneiden, damit diese die exakt vorgesehene Position relativ zum Träger annehmen, nicht mehr erforderlich.

Der Zahneinsatz kann direkt nach dem Ausformen geschliffen werden, so dass besonders präzise und scharfe Schneiden ausgebildet werden, und der geschliffene Zahneinsatz wird dann beschichtet. Der beschichtete Zahneinsatz kann auf die Trägerkante gelötet werden. Ein Nachschleifen und nochmaliges Beschichten nach dem Auflöten ist nicht mehr erforderlich.

Die Erfindung wird anhand eines Ausführungsbeispiels in vier Figuren beschrieben. Dabei zeigen:
- Fig. 1: eine seitliche Ansicht eines erfindungsgemäßen Kreissägeblattes,
- Fig. 2: eine Schnittansicht des Kreissägeblattes in Fig. 1 entlang der Linie II-II,
- Fig. 3: eine perspektivische Ansicht eines Kreissägeblattes in Fig. 1,
- Fig. 4: eine perspektivische Ansicht eines erfindungsgemäßen Zahneinsatzes.

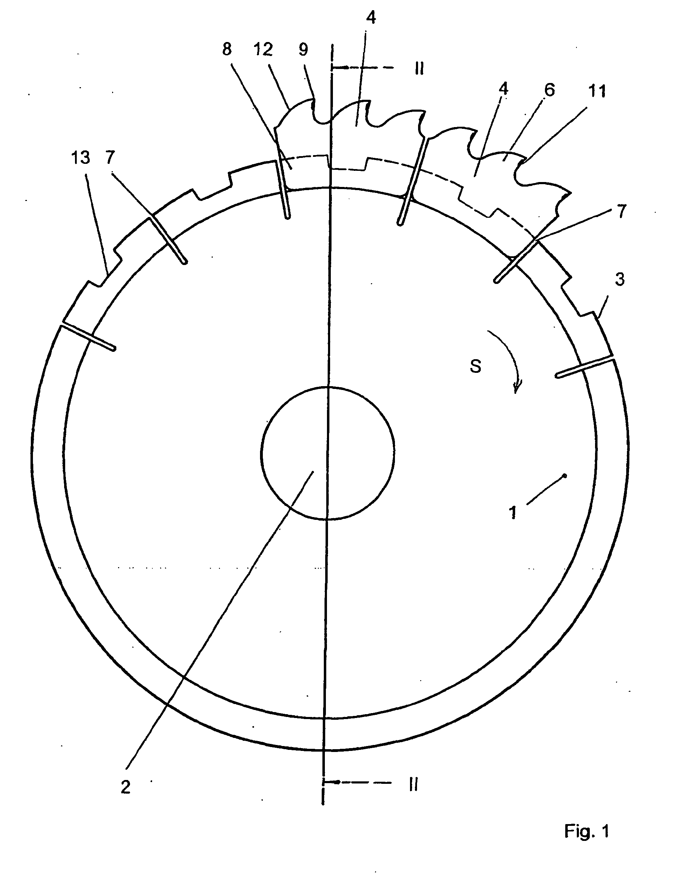

Das in Fig. 1 dargestellte erfindungsgemäße Kreissägeblatt weist einen scheibenförmigen Träger 1 mit einem zentral angeordneten Loch 2 zur Befestigung des Kreissägeblattes an einer Sägemaschine auf. Entlang einer umlaufenden Trägerkante 3 sind nebeneinander baugleiche Zahneinsätze 4 mit jeweils drei Sägezähnen 6 vorgesehen. Zwischen zwei benachbarten Zahneinsätzen 4 ist eine radial verlaufende Nut 7 in den Träger 1 eingelassen. Die Länge der Nut 7 entspricht im Wesentlichen der Höhe einer Halterung 8 des Zahneinsatzes 4.

Die das Kreissägeblatt umlaufende Zahnreihe wird vollständig durch die Zahntrippel der Zahneinsätze 4 gebildet. Im Betrieb rotiert das Kreissägeblatt in Sägerichtung S.

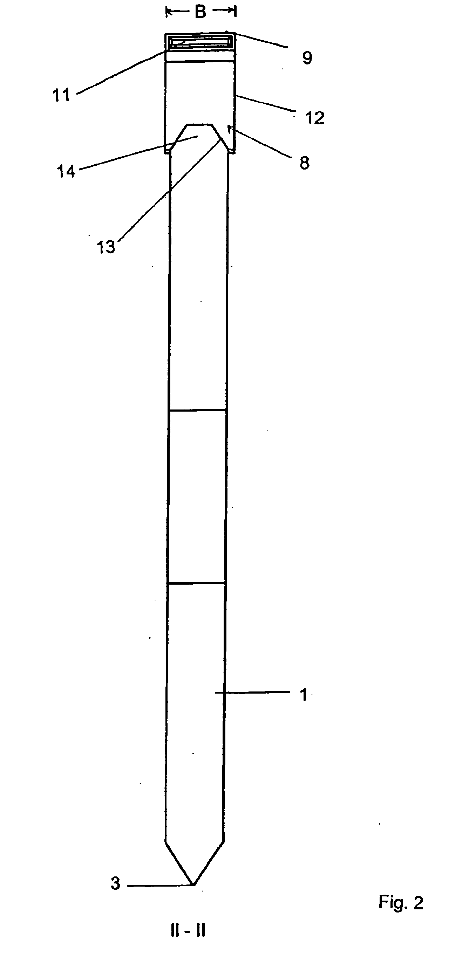

Die in Fig. 2 dargestellte Schnittansicht mit teilweiser Vorderansicht eines Zahnes 6 des Kreissägeblattes zeigt eine Schneide 9 des Sägezahnes 6, die sich über die gesamte senkrecht zur Sägerichtung S verlaufende Breite B des Sägezahnes 6 an dessen oberer Kante erstreckt. Die Schneide 9 läuft einem Zahnrücken 12 vor. Dem Träger 1 zugewandt ist neben der Schneide 9 eine im Wesentlichen löffelförmige Aussparung 11 vorgesehen, die das Herausschälen von während des Sägevorganges anfallenden Sägespänen erleichtert.

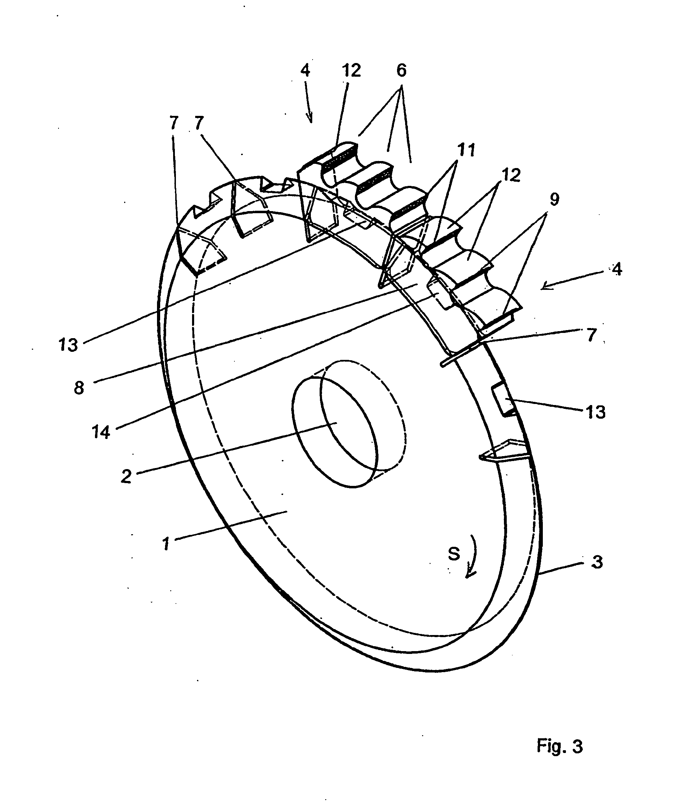

Fig.3 zeigt ein Kreissägeblatt mit zwei montierten Zahneinsätzen 4. Das betriebsfertige Kreissägeblatt weist den Träger 1 vollständig umlaufend unmittelbar nebeneinander aufgebrachte Zahneinsätze 4 auf. Der Träger 1 ist, vorzugsweise vollständig aus HSS-Stahl, einstückig gebildet. Auf dem Träger 1 sind einstückige Zahneinsätze 4 aus HM-Stahl aufgelötet. HM-Stahl ist fester und verschleißfreier als HSS-Stahl und somit werden lange Standzeiten des Kreissägeblattes ermöglicht.

In Fig. 3 sind nur entlang etwa eines Drittels der Trägerkante 3 Nuten 7 und Aussparungen 13 äquidistant und gleichmäßig versetzt zueinander eingezeichnet. Der für den Einsatz bestimmte Träger 1 weist vollständig umlaufend entlang seines Umfanges Nuten 7 und Aussparungen 13 auf. Der Träger 1 ist um den durch einen Zahneinsatzes 4 überstrichenen Winkelbereich rotationssymmetrisch ausgebildet. Die Zahneinsätze 4 sind baugleich und die Trägerkante 3 entlang auf dem Träger 1 angeordnet. Damit bilden die Sägezähne 6 einen den Träger 1 umlaufendes Sägezahnprofil aus.

Die erfindungsgemäße Bauteilkonstruktion des Kreissägeblattes ermöglicht eine gegenüber dem Stand der Technik vereinfachte Sägeblattherstellung. Zunächst wird der Träger 1 des Sägeblattes aus HSS-Stahl ausgeformt. Die kreisförmig umlaufende Trägerkante 3 ist in einem Querschnitt senkrecht zur Sägerichtung S im Wesentlichen dachförmig ausgebildet. Die Schneide 9 verläuft senkrecht zur Sägerichtung S, unabhängig von der Herstellung des Trägers 1 wird eine Reihe von Zahneinsätzen 4 mit jeweils drei Sägezähnen aus HM-Stahl gefertigt.

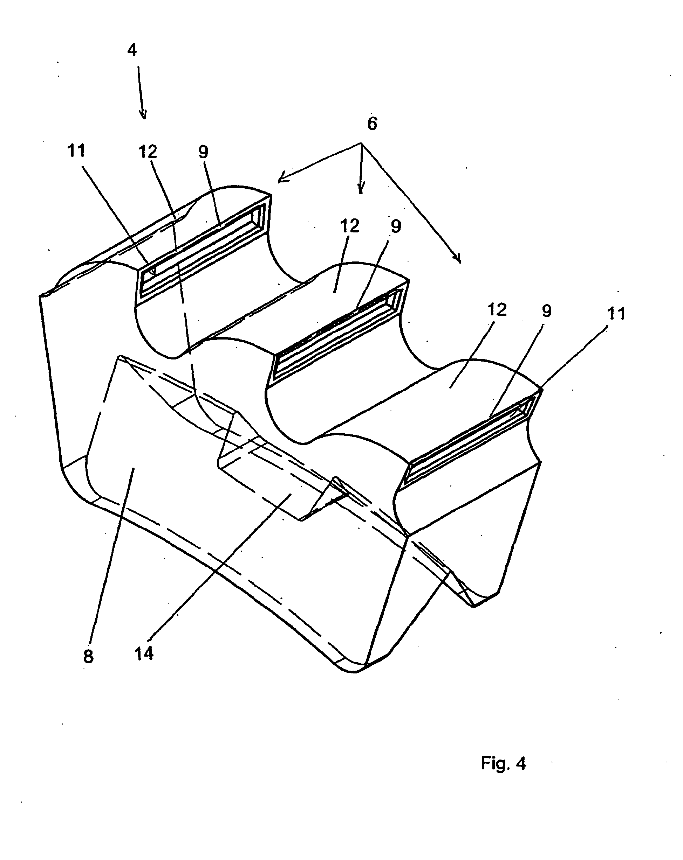

Die Zahneinsätze 4 sind baugleich und in Fig.4 perspektivisch dargestellt. Sie weisen jeweils eine trägerseitige Halterung 8 auf, von der jeweils die drei Sägezähne 6 mit jeweils einer senkrecht zur Sägerichtung S verlaufenden Schneide 9 und einem jeder Schneide 9 nachlaufenden Zahnrücken 12 abstehen. Die Stellung der Sägezähne 6 des Zahneinsatzes 4 ist der Krümmung des Trägers 1 entlang der Trägerkante 3 angepasst. Darüber hinaus ist die Halterung 8 als eine im Querschnitt senkrecht zur Sägerichtung S der Dachform der Trägerkante 3 angepasste dachförmig Aussparung ausgebildet.

Die Halterung 8 ist als von einer vorlaufenden zu einer nachlaufenden Zahneinsatzseite ausgebildete dachförmige Aussparung mit einer Längsausdehnung in Sägerichtung S und einem senkrecht dazu dreieckförmigen Querschnitt vorgesehen, in der mittig eine Ausbuchtung 14 zum Träger 1 hin absteht. Die Ausbuchtung 14 ist derart dimensioniert, dass sie im montierten Zustand formschlüssig in eine der entlang der Trägerkante 3 angeordneten zugeordneten Aussparung 13 passt. Das Zusammenwirken von Ausbuchtung 14 und Aussparung 13 stabilisiert den Zahneinsatz 4 insbesondere in Sägerichtung S während des Betriebs. Darüber hinaus erleichtert die Ausbuchtung 14 die Montage des Sägezahnes auf der Trägerkante 3. Der Zahneinsatz 4 zieht sich durch die Montage selbst in die richtige Position entlang der Trägerkante 1.

Die Zahneinsatze 4 können durch ein in einer Hohlform gepresstes Material und nachfolgendem Sintern hergestellt werden. Die Form der Schneide 9 ist durch die Ausgestaltung der Hohlform bestimmt und damit beinahe beliebig wählbar.

Der ausgeformte Zahneinsatz 4 wird beschichtet und dann wird der beschichtete Sägezahneinsatz 4 auf den Träger 1 aufgelötet. Der Sägezahneinsatz 4 ist hinreichend lang und die Halterung 8 kann so genau der Trägerkante 3 angeformt werden, dass ein Nachschleifen der Schneiden 9 nach dem Auflöten des Zahneinsatzes 4 nicht mehr erforderlich ist.

### Bezugszeichenliste:

| | |
|---|---|
| 1 | Träger |
| 2 | Loch |
| 3 | Trägerkante |
| 4 | Zahneinsatz |
| 6 | Sägezahn |
| 7 | Nut |
| 8 | Halterung |
| 9 | Schneide |
| 11 | löffelförmige Aussparung |
| 12 | Zahnrücken |
| 13 | Aussparung |
| 14 | Ausbuchtung |

| | |
|---|---|
| B | Breite |
| S | Sägerichtung |

## Patentansprüche

1. Sägemittel mit einem im Wesentlichen scheibenförmig ausgebildeten Träger (1), von dem eine Vielzahl nebeneinander entlang einer Trägerkante (3) angeordnete Zahneinsätze (4), mit wenigstens jeweils einem Sägezahn (6) mit wenigstens einem Zahnrücken (12) und wenigstens einer Schneide (9) absteht, wobei die Zahneinsätze (4) auch im Sägebetrieb positionsstabil mit dem Träger (1) verbunden sind,
die Trägerkante (3) in einem Querschnitt quer zur Scheibenebene im Wesentlichen dachförmig ausgeformt ist, **dadurch gekennzeichnet, dass** die Zahneinsätze (4) eine als eine der Dachform der Trägerkante (3) angepasste, von einer vorlaufenden zu einer nachlaufenden Zahneinsatzseite dachförmig ausgebildete Aussparung mit einer Längsausdehnung in Sägerichtung (S) ausgebildete Halterung (8) aufweisen, und entlang der Trägerkante (3) angeordnete Aussparungen (13) und/oder Ausbuchtungen (14) vorgesehen sind, denen innenseitig der Halterung (8) eines Zahneinsatzes (4) angeordnete korrespondierende Ausbuchtungen (14) und/oder Aussparungen (13) zugeordnet sind und die Ausbuchtungen (14) formschlüssig in die korrespondierenden Aussparungen (13) eingepasst sind.

2. Sägemittel nach Anspruch 1,
**dadurch gekennzeichnet, dass** die Zahneinsätze (4) einstückig ausgeformt sind.

3. Sägemittel nach Anspruch 1 oder 2,
**dadurch gekennzeichnet, dass** alle äußeren Seitenwände der Ausbuchtungen (14) in radialer Richtung stetig aufeinander zugeneigt angeordnet sind.

4. Sägemittel nach Anspruch 1, 2 oder 3,
**dadurch gekennzeichnet, dass** jeder Zahneinsatz (4) wenigstens drei aufeinanderfolgende Sägezähne (6) umfasst.

5. Sägemittel nach wenigstens einem der vorstehenden Ansprüche,
**dadurch gekennzeichnet, dass** alle Zahneinsätze (4) baugleich ausgeformt sind.

6. Sägemittel nach wenigstens einem der vorstehenden Ansprüche,
**dadurch gekennzeichnet, dass** zwischen aufeinanderfolgenden Zahneinsätzen (4) entlang der Trägerkante (3) jeweils wenigstens eine Nut (7) quer zur Reihe der Sägezähne (6) in dem Träger (1) vorgesehen ist.

7. Sägemittel nach wenigstens einem der vorstehenden Ansprüche,
**dadurch gekennzeichnet, dass** radial innenseitig der Schneide (9) eine Aussparung (11) in dem Sägezahn (6) vorgesehen ist.

8. Sägemittel nach Anspruch 1,
**dadurch gekennzeichnet, dass** die Zahneinsätze (4) ein zweites Material aufweisen und der Träger (1) ein erstes Material aufweist und das zweite Material härter und verschleißärmer als das erste Material ist.

9. Sägemittel nach Anspruch 8,
**dadurch gekennzeichnet, dass** die Zahneinsätze (4) im Wesentlichen vollständig aus dem zweiten Material bestehen.

10. Sägemittel nach wenigstens einem der vorstehenden Ansprüche,
**dadurch gekennzeichnet, dass** die Halterung (8) mit einer Lötverbindung an der Trägerkante (3) positionsstabil verbunden ist.

11. Sägemittel nach wenigstens einem der vorstehenden Ansprüche,
**dadurch gekennzeichnet, dass** die wenigstens eine Schneide (9) mit einer Schutzschicht überzogen ist.

12. Verfahren zur Herstellung eines Sägemittels nach einem der vorstehenden Ansprüche, indem:
Materialpulver in genau einer Hohlform zu einem Zahneinsatz (4) gepresst wird, mit jeweils wenigstens einem Sägezahn (6) mit wenigstens einer Schneide (9) und
wenigstens einem Zahnrücken (12) und mit einer als im Wesentlichen von einer vorlaufenden zu einer nachlaufenden Zahneinsatzseite dachförmig ausgebildeten Aussparung mit einer Längsausdehnung in Sägerichtung (S) ausgebildeten Halterung (8), die einer Dachform der Trägerkante (3) eines Trägers (1) angepasst ist und mit wenigstens einer innenseitig der Halterung (8) des Zahneinsatzes (4) angeordneten Ausbuchtung (14) und/oder Aussparung (13) und
das gepresste Materialpulver gehärtet wird und
der gehärtete Zahneinsatz (4) dann entlang der Trägerkante (3) auch im Sägebetrieb positionsstabil befestigt wird, indem die wenigstens eine Ausbuchtung (14) und/oder Aussparung (13) des Zahneinsatzes (4) in korrespondierende Aussparungen (13) und/oder Ausbuchtungen (14) der Trägerkante formschlüssig eingepasst wird.

13. Verfahren nach Anspruch 12,
**dadurch gekennzeichnet, dass** das gepresste Materialpulver gesintert wird.

14. Verfahren nach Anspruch 12 oder 13,
**dadurch gekennzeichnet, dass** die Zahneinsätze (4) auf den Träger (1) gelötet werden.

15. Verfahren nach Anspruch 12, 13 oder 14,
**dadurch gekennzeichnet, dass** die wenigstens eine Schneide (9) vor der Befestigung am Träger (1) mit einer Schutzschicht beschichtet wird.

## Claims

1. Sawing means comprising a substantially disc-shaped carrier (1), from which there protrude a plurality of tooth inserts (4) which are arranged next to one another along a carrier edge (3) and which have in each case at least one sawtooth (12) with at least one tooth back (12) and at least one cutting edge (9), wherein the tooth inserts (4) are connected to the carrier (1) in a positionally stable manner even during sawing operation, the carrier edge (3) is substantially roof-shaped in a cross-section transverse to the disc plane, **characterised in that** the tooth inserts (4) having a mount (8) configured as cutout matching the roof shape of the carrier edge (3) running from an advanced to a trailing tooth insert side with a longitudinal dimension in sawing direction (S), and cutouts (13) and/or bulges (14)are provided which are arranged along the carrier edge (3) and to which there are assigned corresponding bulges (14) and/or cutouts (13) arranged on the inside of the mount (8) of a tooth insert (4), and the bulges (14) fit into the corresponding cutouts (13) with a form fit.

2. Sawing means according to claim 1, **characterised in that** the tooth inserts (4) are formed in one piece.

3. Sawing means according to claim 1 or 2, **characterised in that** all the outer side walls of the bulges (14) are arranged permanently inclined with respect to one another in the radial direction.

4. Sawing means according to claim 1, 2 or 3, **characterised in that** each tooth insert (4) comprises at least three successive sawteeth (6).

5. Sawing means according to at least one of the preceding claims, **characterised in that** all tooth inserts (4) are shaped in a structurally identical manner.

6. Sawing means according to at least one of the preceding claims, **characterised in that** in each case at least one groove (7) transverse to the row of sawteeth (6) is provided in the carrier (1) between successive tooth inserts (4) along the carrier edge (3).

7. Sawing means according to at least one of the preceding claims, **characterised in that** a cutout (11) is provided in the sawtooth (6) radially inside the cutting edge (9).

8. Sawing means according to claim 1, **characterised in that** the tooth inserts (4) comprise a second material and the carrier (1) comprises a first material, and the second material is harder and less susceptible to wear than the first material.

9. Sawing means according to claim 8, **characterised in that** the tooth inserts (4) are made substantially entirely from the second material.

10. Sawing means according to at least one of the preceding claims, **characterised in that** the mount (8) is connected to the carrier edge (3) in a positionally stable manner via a soldered join.

11. Sawing means according to at least one of the preceding claims, **characterised in that** the at least one cutting edge (9) is coated with a protective layer.

12. Method for producing a sawing means according to one of the preceding claims, in which:
material powder is pressed into just one hollow mould in order to form a tooth insert (4) comprising at least one sawtooth (6) with at least one cutting edge (9) and at least one tooth back (12) and with a mount (8) configured as a substantially roof-shaped cutout running from an advanced to a trailing tooth insert side with a longitudinal dimension in sawing direction (S) which matches a roof shape of a carrier edge (3) of a carrier (1), and with at least one bulge (14) and/or cutout (13) arranged on the inside of the mount (8) of the tooth insert (4), and
the pressed material powder is hardened, and
the hardened tooth insert (4) is then fixed along the carrier edge (3) in a positionally stable manner even during sawing operation, by fitting the at least one bulge (14) and/or cutout (13) of the tooth insert (4) into corresponding cutouts (13) and/or bulges of the carrier edge with a form fit.

13. Method according to claim 12, **characterised in that** the pressed material powder is sintered.

14. Method according to claim 12 or 13, **characterised in that** the tooth inserts (4) are soldered onto the carrier (1).

15. Method according to claim 12, 13 or 14, **characterised in that** the at least one cutting edge (9) is coated with a protective layer before being fixed to the carrier (1).

## Revendications

1. Moyen de sciage avec un support (1) configuré sensiblement en forme de disque (1) à partir duquel une multitude d'inserts de dent (4) placés les uns à côté des autres le long d'une arête du support (3) font saillie avec au moins une dent de scie (6) avec au moins un dos de dent (12) et au moins un tranchant (9), les inserts de dent (4) étant reliés au support (1) en étant stables en position, même en activité de sciage, l'arête du support (3) étant formée sensiblement en forme de toit dans une coupe transversale transversalement par rapport au plan du disque, **caractérisé en ce que** les inserts de dent (4) présentent un soutien (8) avec un évidement, adapté à la forme de toit de l'arête du support (3), configuré en forme de toit à partir d'un côté d'insert de dent qui va vers l'avant vers un côté d'insert de dent qui va vers l'arrière, avec une extension en longueur dans le sens du sciage (S) et que des évidements (13) et/ou des courbures (14) placées le long de l'arête du support (3) sont prévues auxquelles sont associées des courbures (14) et/ou des évidements (13) correspondants placés sur le côté intérieur du soutien (8) d'un insert de dent (4) et les courbures (14) sont ajustées de manière crabotée dans les évidements correspondants (13).

2. Moyen de sciage selon la revendication 1,
**caractérisé en ce que** les inserts de dent (4) sont formés en une pièce.

3. Moyen de sciage selon la revendication 1 ou 2,
**caractérisé en ce que** toutes les parois latérales extérieures des courbures (14) sont placées dans le sens radial en étant inclinées les unes vers les autres de manière continue.

4. Moyen de sciage selon la revendication 1, 2 ou 3,
**caractérisé en ce que** chaque insert de dent (4) comprend au moins trois dents de scie qui se suivent (6).

5. Moyen de sciage selon au moins l'une des revendications précédentes, **caractérisé en ce que** tous les inserts de dent (4) sont formés de même construction.

6. Moyen de sciage selon au moins l'une des revendications précédentes,
**caractérisé en ce que** respectivement au moins une rainure (7) est prévue le long de l'arête de support (3) entre des inserts de dent (4) qui se suivent, transversalement par rapport à la rangée de dents de scie (6) dans le support (1).

7. Moyen de sciage selon au moins l'une des revendications précédentes,
**caractérisé en ce qu'**il est prévu un évidement (11) dans la dent de scie (6) radialement sur le côté intérieur du tranchant (9).

8. Moyen de sciage selon la revendication 1,
**caractérisé en ce que** les inserts de dent (4) présentent un second matériau et le support (1) présente un premier matériau et le second matériau est plus dur et plus inusable que le premier matériau.

9. Moyen de sciage selon la revendication 8,
**caractérisé en ce que** les inserts de dent (4) sont substantiellement entièrement en second matériau.

10. Moyen de sciage selon au moins l'une des revendications précédentes,
**caractérisé en ce que** le soutien (8) est relié en étant stable en position avec une jonction par brasage sur l'arête de support (3).

11. Moyen de sciage selon au moins l'une des revendications précédentes,
**caractérisé en ce que** le tranchant qui existe au moins (9) est revêtu d'une couche de protection.

12. Procédé de fabrication d'un moyen de sciage selon l'une des revendications précédentes,
de la poudre de matériau étant pressée dans exactement un moule creux en un insert de dent (4) avec respectivement au moins une dent de scie (6) avec au moins un tranchant (9) et au moins un dos de dent (12) et avec un soutien (8), qui est adapté à une forme de toit de l'arête de support (3) d'un support (1), configuré comme un évidement, configuré en forme de toit substantiellement d'un côté d'insert de dent qui va vers l'avant vers un côté d'insert de dent qui va vers l'arrière, avec une extension en longueur dans le sens du sciage (S) et avec au moins une courbure (14) et/ou un évidement (13) placé sur le côté intérieur du soutien (8) de l'insert de dent (4) et
la poudre de matériau pressée étant durcie et
l'insert de dent durci (4) étant ensuite fixé le long de l'arête de support (3) en étant stable en position, même en activité de sciage, la courbure (14) et/ou l'évidement (13) qui existe au moins de l'insert de dent (4) étant ajusté de manière crabotée dans des évidements (13) et/ou des courbures correspondantes (14) de l'arête de support.

13. Procédé selon la revendication 12,
**caractérisé en ce que** la poudre de matériau pressée est frittée.

14. Procédé selon la revendication 12 ou 13,
**caractérisé en ce que** les inserts de dent (4) sont soudés sur le support (1).

15. Procédé selon la revendication 12, 13 ou 14,
**caractérisé en ce que** le tranchant qui existe au moins (9) est revêtu d'une couche de protection avant la fixation sur le support (1).
